# FASCICULE DE BREVET EUROPEEN

(11) **EP 3 594 484 B1**
(45) Date de publication et mention de la délivrance du brevet: **29.09.2021**
(21) Numéro de dépôt: 19185286.2
(22) Date de dépôt: 09.07.2019
(51) Int. Cl.: F02K 9/84

(54) **PROTECTION THERMIQUE ANNULAIRE ET PROCÉDÉ DE FABRICATION D'UNE TELLE PROTECTION**
RINGFÖRMIGE WÄRMESCHUTZVORRICHTUNG UND HERSTELLUNGSVERFAHREN EINER SOLCHEN SCHUTZVORRICHTUNG
ANNULAR THERMAL PROTECTION AND METHOD FOR MANUFACTURING SUCH PROTECTION

(30) Priorité: 12.07.2018 FR 1856444
(43) Date de publication de la demande: 15.01.2020
(73) Titulaire: ArianeGroup SAS, 75015 Paris (FR)
(72) Inventeur: SOURIGUES, Fabien, 33700 MERIGNAC (FR); CLAUDEL, Sylvain, 33160 SAINT MEDARD EN JALLES (FR); SAINT-HILAIRE, Philippe, 33160 SAINT MEDARD EN JALLES (FR); LAROSE, Thomas, 65390 ANDREST (FR)
(74) Mandataire: Brevalex

(56) Documents cités:
- EP-A1- 0 441 703
- US-A- 3 504 903
- US-A- 4 435 023

## Description

### Domaine de l'invention

La présente invention concerne une protection thermique annulaire souple textile se positionnant entre la jupe arrière et la tuyère d'un lanceur spatial. Une telle protection a pour but de protéger la jupe arrière des gaz de combustion éjectés par la tuyère tout en autorisant et en accompagnant les mouvements de cette dernière.

L'invention concerne en outre la fabrication d'une telle protection qui doit allier souplesse importante et résistance aux gaz éjectés par la tuyère.

### Arrière plan technologique

Des protections annulaires entre une jupe arrière d'un lanceur et une tuyère de moteur fusée sont connues notamment des documents US3698192A, US4047667A, US4108381A US2008309023A1, RU2647269C1, et EP0441703A1. Dans le du document EP0441703A1, la protection comporte deux parties de révolution articulées l'une par rapport à l'autre, résultant en un montage complexe.

### Brève description de l'invention

La protection annulaire de la présente invention se situe dans un contexte où la tuyère est fixée au corps du lanceur au travers de son moteur et non directement dans le corps du lanceur.

Dans un tel cas, pour protéger la jupe arrière du lanceur, il n'est pas nécessaire de prévoir un système combinant les fonctions de joint et de support mais par contre il est nécessaire de prévoir un écran supportant des contraintes mécaniques importantes dues aux mouvements de la tuyère en supplément du flux thermique de la tuyère.

Dans ce contexte, la présente invention propose de réaliser une protection annulaire textile souple se positionnant entre la jupe arrière et la tuyère d'un lanceur spatial et comportant une face externe résistante à la chaleur et une face interne qui apporte les caractéristiques de tenue mécanique et de souplesse à la protection afin de laisser libre la tuyère dans ses mouvements tout en évitant de déchirer la protection.

L'invention propose plus précisément d'une part un procédé de fabrication d'une protection thermique annulaire souple textile, se positionnant entre la jupe arrière et la tuyère d'un lanceur spatial,
- qui comporte la réalisation d'un ou plusieurs premiers gabarits support en forme de secteurs de tambour hyperboloïde de révolution définissant la forme de la surface interne de la protection,
- qui comporte la réalisation, sur une partie inférieure et une partie supérieure de ces secteurs de tambour, de plis constitutifs de demi faces internes de secteurs de la protection,
- qui comporte la pose et la couture de ces demi faces internes ensemble sur le ou les gabarits support pour former la face interne desdits secteurs de la protection,
- qui comporte la pose et la couture d'une couche de rembourrage sur l'extérieur de ladite face interne puis la pose et la couture d'une face externe de la protection sur le rembourrage de sorte que les secteurs de protection ainsi réalisés épousent le profil desdits secteurs de tambour hyperboloïde,
- qui comporte la couture des secteurs de la protection bout à bout ensemble pour former une bande de la longueur de la protection et la couture des extrémités de la bande ensemble pour terminer la protection annulaire.

Selon un mode de réalisation particulier, le ou les premiers gabarits support ont une longueur d'un cinquième de la circonférence du tambour hyperboloïde.

Avantageusement, la face interne de la protection annulaire est réalisée à partir de plis de tissu aramide et, pour réaliser ladite face interne on découpe des plis de tissu aramide en forme générale en trapèzes isocèles dont les bords parallèles sont courbes pour épouser la courbure de la protection terminée et dont les bords inclinés font un angle avec les bords parallèles adapté à réaliser des bords parallèles à l'axe de révolution de la protection une fois celle-ci terminée et, on découpe des plis de renfort aramide ensuite cousus sur les plis en trapèzes isocèles pour réaliser des plis renforcés.

Les plis renforcés sont préférablement disposés les uns à côté des autres avec recouvrement et cousus ensemble sur un demi secteur supérieur ou inférieur du premier gabarit pour réaliser une bande supérieure ou inférieure aramide de la longueur du secteur et des lés de renfort aramide sont avantageusement cousus sur les bords supérieur et inférieur des bandes supérieure et/ou inférieure.

Les bandes supérieure et inférieure sont avantageusement disposées sur les parties supérieure et inférieure des secteurs de tambour et assemblées ensemble par couture avec recouvrement au niveau de la jonction de périmètre le plus petit du secteur hyperboloïde pour réaliser un secteur de nappe hyperboloïde de la longueur du secteur et de la hauteur du secteur.

Préférablement, on dépose et coud la couche de rembourrage sur la face externe des plis de tissu aramide, puis on dépose et coud la face externe en tissu céramique de la protection en forme sur le secteur en réalisant des sur-longueurs de limitation de tension de ladite face externe.

Selon un mode de réalisation particulier, cinq nappes identiques, chacune épousant la forme du secteur hyperboloïde, sont réalisées et ces nappes sont ensuite retirées et assemblées bout à bout avec recouvrement, à plat ou sur un second gabarit en forme de tambour hyperboloïde, pour former une bande dont la longueur correspond au périmètre de la protection.

Le second gabarit peut en particulier comporter une partie supérieure et une partie inférieure séparables selon le plan contenant le diamètre le plus faible de la protection et, une fois la couture des deux extrémités de la bande pour boucler la protection annulaire réalisée, on sépare les deux parties du second gabarit pour libérer la protection annulaire dont la face interne est constituée par les plis textiles aramide assemblés et la face externe est constituée par les plis textile céramique assemblés.

Avantageusement, on procède à une enduction des faces interne et externe de la protection thermique annulaire.

L'enduction sur la face externe de la protection annulaire est préférablement une enduction au moyen d'un film polyuréthane contrecollé sur le tissu pour protéger ladite protection contre l'humidité et lui assurer une souplesse importante.

L'enduction sur la face interne est préférablement une enduction de type enduction silicone HTV.

L'invention concerne d'autre part une protection thermique annulaire souple textile multicouches à profil diabolo, destinée à se positionner entre la jupe arrière et la tuyère d'un lanceur spatial, obtenue selon le procédé décrit précédemment, et qui comporte une couche interne constituée par des plis de tissu aramide, une couche médiane de rembourrage et une couche externe constituée par des plis de tissu à fibres céramiques, l'ensemble des couches étant constitué des plis ou lés cousus, les couches étant en outre cousues ensemble, la couche externe étant cousue avec des sur-longueurs de limitation d'efforts sur ladite couche externe lors de mouvements de la protection.

Préférablement, la couche externe est cousue avec des sur-longueurs de limitation d'efforts sur ladite couche externe lors de mouvements de la protection.

Avantageusement, les bords supérieur et inférieur de la protection sont munis de pattes pourvues d'œillets sous des rabats.

Préférablement, les pattes se replient en forme de goussets de retenue de câbles métalliques de renfort de la protection.

Les œillets sont avantageusement configurés pour recevoir des vis ou rivets de fixation d'une part avec la jupe et d'autre part avec une collerette sur la tuyère.

L'invention s'applique à un lanceur, fusée ou véhicule spatial comportant une jupe arrière et une tuyère reliées par une protection thermique selon l'invention.

### Brève description des dessins

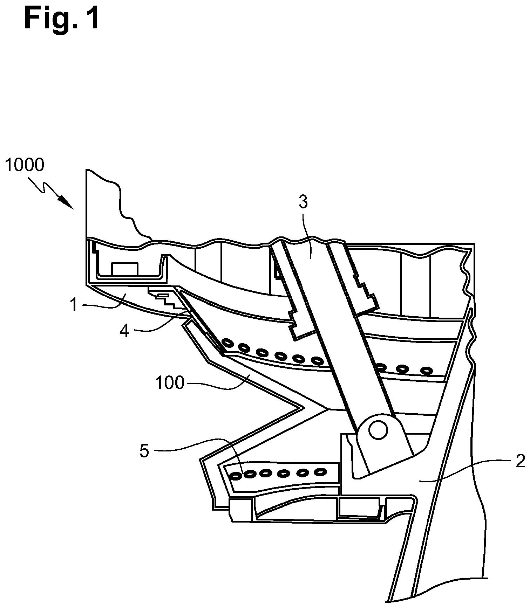

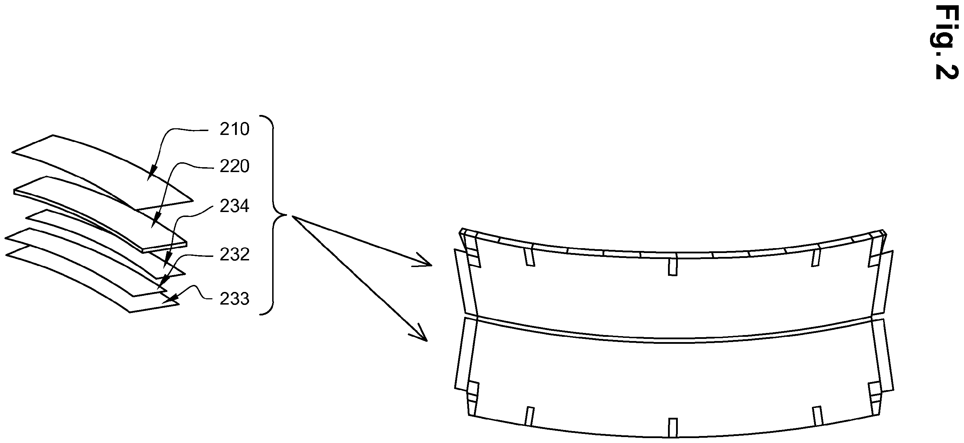

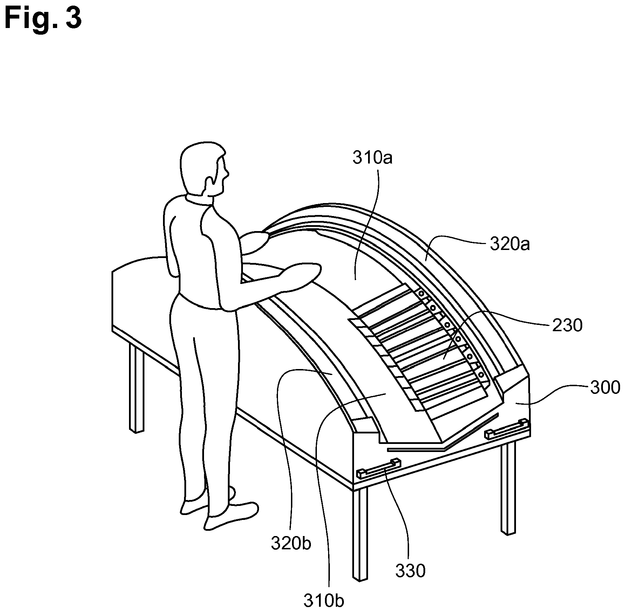

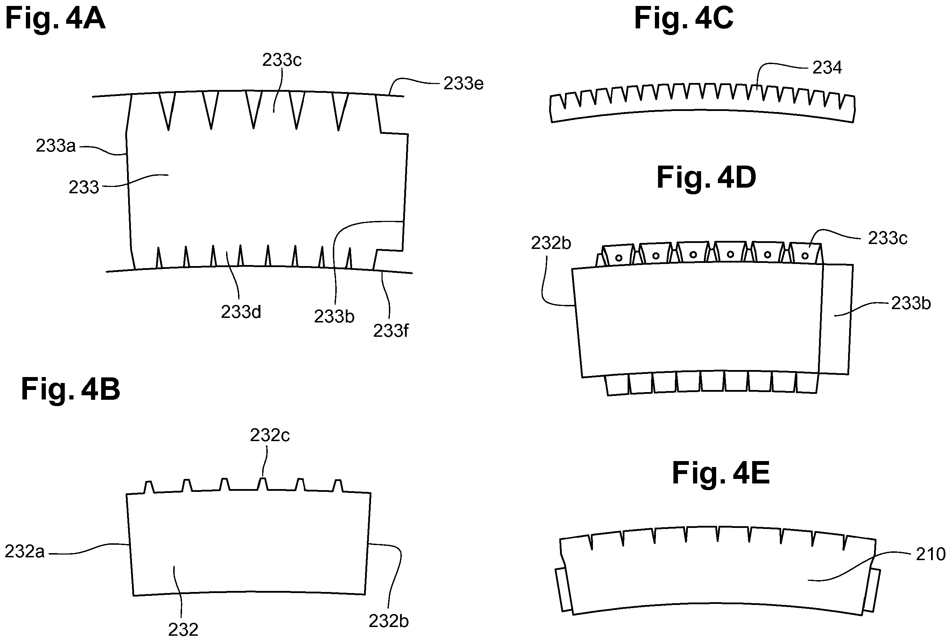

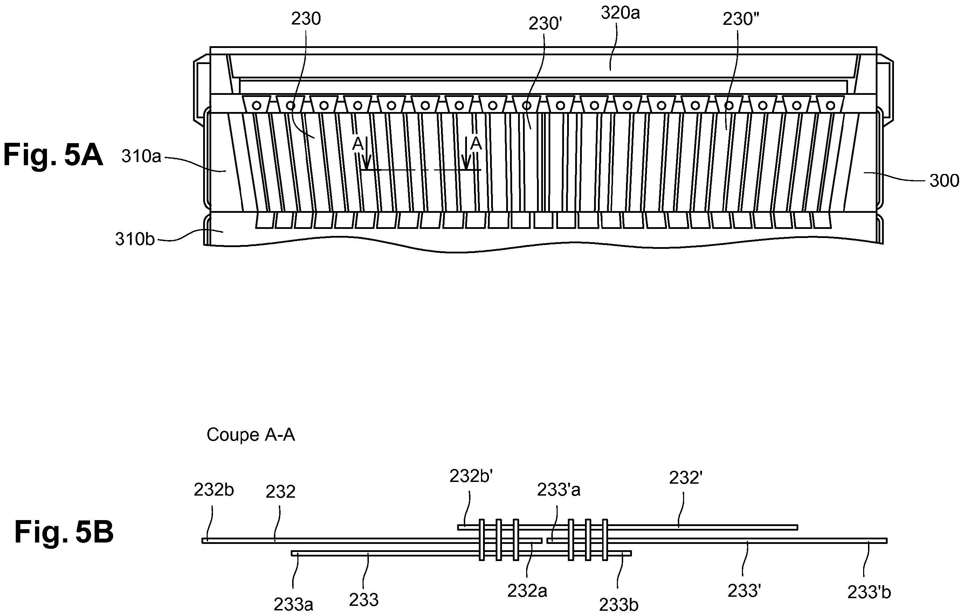

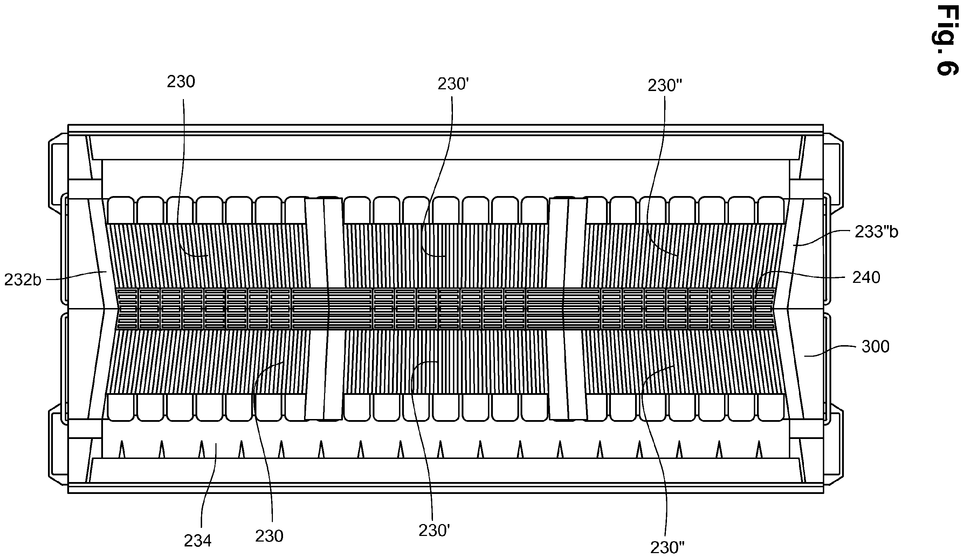

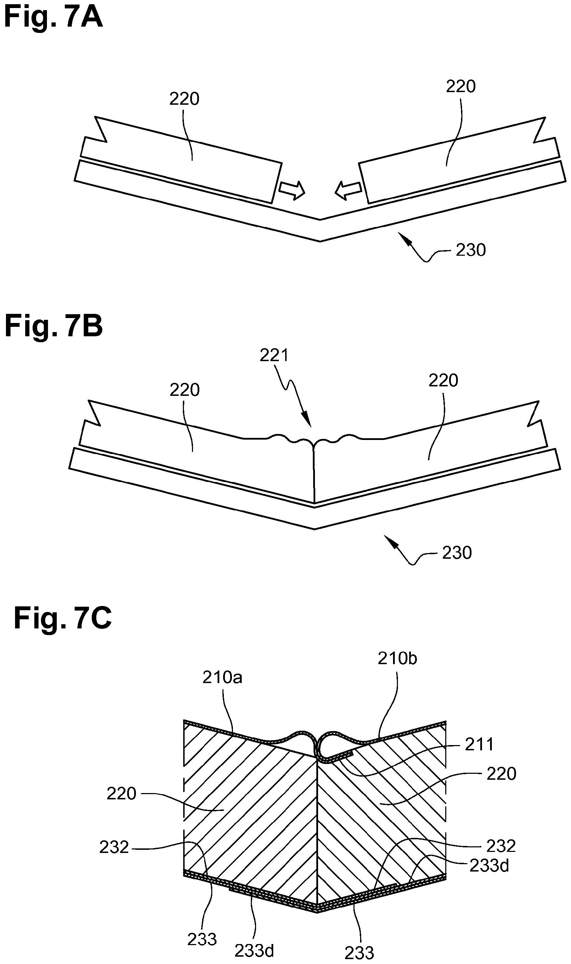

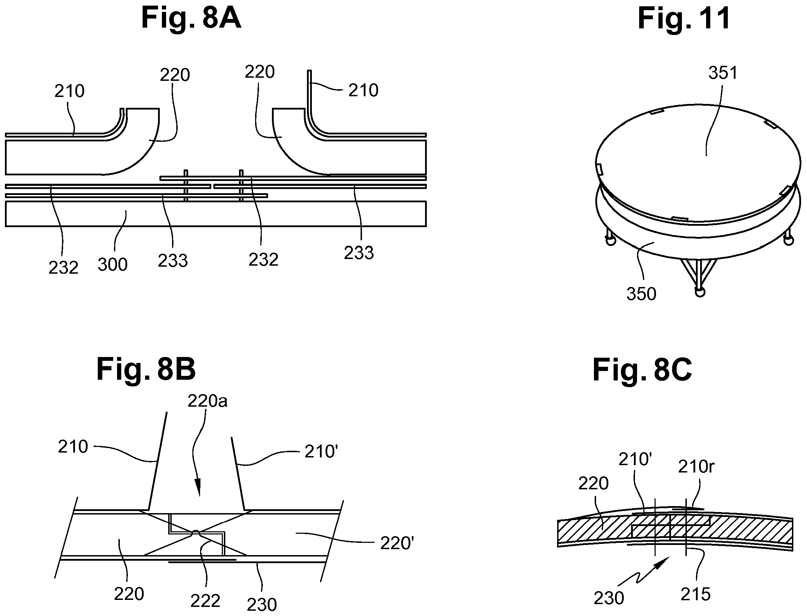

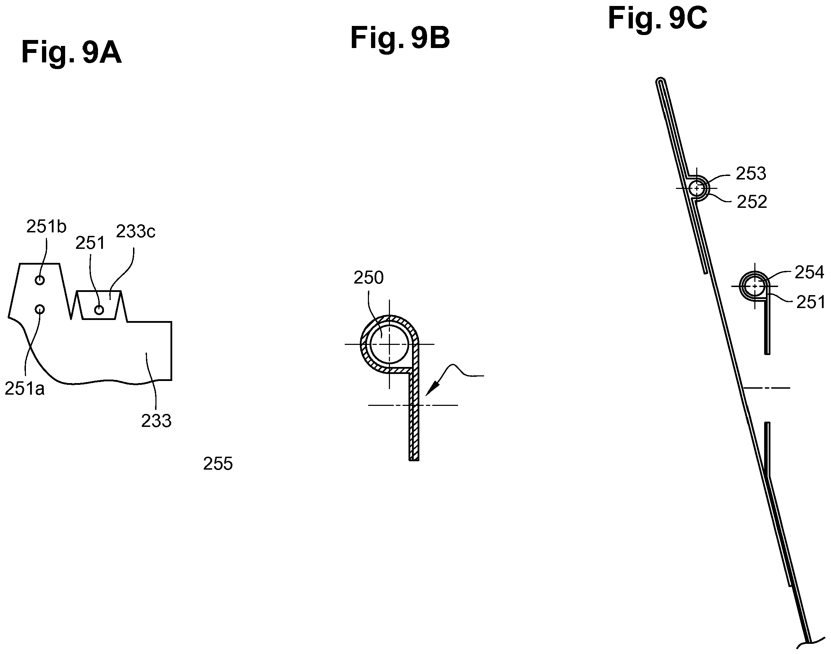

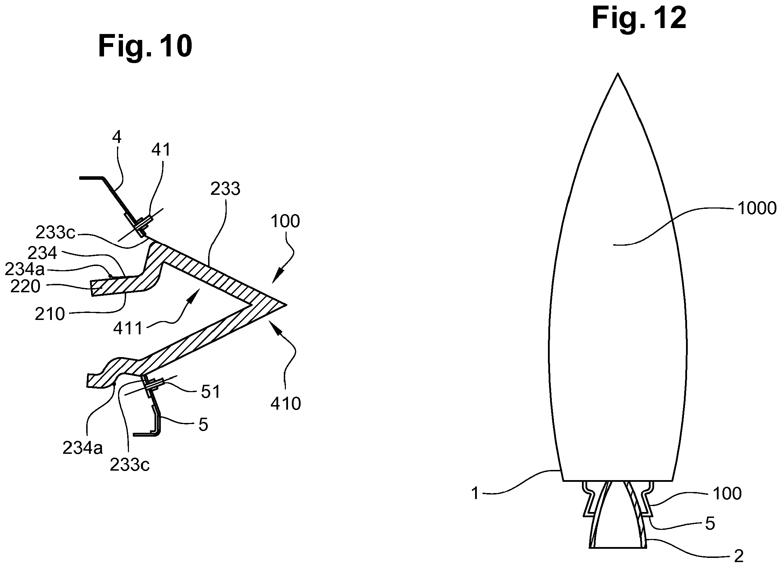

D'autres caractéristiques et avantages de l'invention seront apparents à la lecture de la description qui suit d'un exemple non limitatif de réalisation de l'invention en référence aux dessins qui représentent:
- En figure 1:: Une vue perspective coupe d'un détail d'un lanceur spatial au niveau de la jupe arrière et de la tuyère de ce lanceur;
- En figure 2:: Une vue en perspective d'un secteur de protection de l'invention avec représentation d'un empilement de couches de ladite protection;
- En figure 3:: Une vue en perspective d'un premier gabarit de réalisation de secteurs de la protection;
- Aux figures 4A à 4C:: Des vues de face de lés de réalisation de la couche interne de la protection;
- A la figure 4D:: Une vue de face de ladite couche interne en cours de réalisation;
- A la figure 4E:: Une vue de face d'un lé ou pli de réalisation de la couche externe de la protection;
- Aux figures 5A et 5B:: Respectivement une vue de dessus et une vue schématique de côté de l'assemblage de lés d'un demi secteur de la couche interne;
- En figure 6:: Une vue de dessous de la couche interne d'un secteur complet assemblée;
- Aux figures 7A à 7C:: Des vues de détail coupe de côté de l'assemblage d'une couche de rembourrage et de lés de la couche externe de la protection;
- Aux figures 8A à 8C:: Des vues de détail en coupe de côté de l'assemblage de secteurs de la protection entre eux;
- Aux figures 9A à 9C:: des vues de détails de réalisation de renforts de la protection;
- En figure 10:: Une vue en coupe de la protection terminée en position;
- En figure 11:: Une vue en perspective de dessus d'un second gabarit selon un mode de réalisation de l'invention;
- En figure 12:: Une vue schématique d'un lanceur, fusée ou véhicule spatial équipé d'une protection thermique de l'invention.

### Description détaillée de modes de réalisation de l'invention

L'invention concerne une protection annulaire 100 telle que représentée en figure 1 en perspective coupe entre une jupe arrière 1 d'un lanceur 1000 et une tuyère 2 du lanceur, fusée ou véhicule spatial à moteur fusée.

Selon l'exemple, la tuyère 2 est manœuvrable de manière connue au moyen de vérins dont un vérin 3 est représenté.

La tuyère peut aussi n'être solidaire que du moteur du lanceur ce dernier assurant les mouvements de la tuyère.

Notamment la présente invention trouve son application dans les lanceurs tels qu'Ariane 6 et plus particulièrement les boosters dits P120 de ce lanceur ou le lanceur Vega C.

La protection annulaire 100 est fixée à la jupe 1 au moyen d'une première collerette 4 et est fixée à la tuyère 2 au moyen d'une seconde collerette 5.

La protection conformée en diabolo constitue un soufflet entre la jupe et la tuyère et réalise une protection thermique souple autorisant les mouvements d'orientation de la tuyère.

Selon l'invention la protection annulaire est un tissu multicouches comportant principalement une couche multiplis de textile de protection thermique, la couche externe de la protection, et une couche multiplis de textile destinée à assurer la tenue mécanique de la protection, la couche interne de la protection. Entre les deux couches de tissus est disposé un rembourrage tel qu'un feutre ou non tissés à base de fibre de silice ou de verre par exemple de la marque Fibermax.

La couche multiplis de textile externe est soumise directement aux agressions externes. Elle a pour principale exigence de résister aux agressions thermiques pendant le vol, à savoir la température maximale des gaz chauds éjectés, les variations de pression causée par l'éjection des gaz, les effets aérodynamiques du vol ainsi que les contraintes de déformation causées par les gaz, les remous aérodynamiques du vol et encaisser les mouvements de la tuyère. La couche externe doit également être étanche pendant les phases de vie au sol du lanceur et notamment assurer la protection des textiles internes de la protection annulaire contre l'environnement humide ainsi que la protection des ateliers contre la dissémination de fibrilles de la protection.

La couche multiplis de textile interne, présente la face la plus froide dans le complexe. Cette couche transmet les efforts mécaniques entre la jupe arrière du lanceur et la tuyère et doit donc présenter de bonnes propriétés mécaniques de souplesse et de solidité ainsi qu'une étanchéité tout au long de son fonctionnement. La couche interne protège la couche externe vis-à-vis des contraintes mécaniques dues aux mouvements de la tuyère.

En effet , la couche externe doit être réalisée dans un matériau souple et très résistant à la chaleur or il n'existe pas de matériau répondant à ces deux exigences et suffisamment léger pour être utilisé dans le cadre des applications spatiales.

Selon l'invention, le textile externe est un textile à base de fibres céramiques et le textile interne est un textile à fibres aramides.

La figure 2 représente une vue d'un secteur 110 de la protection associée avec une décomposition des plis des diverses couches des partie basse 110a et haute 110b du secteur.

La couche interne comporte plusieurs lés ou plis ou pièces de tissu 234, 232, 233 adaptés à réaliser la forme courbe de la protection. Sur cette couche interne est positionné un rembourrage non tissé 220 qui va aussi absorber les chocs et tensions entre les deux couches, ce non tissé étant lui-même recouvert d'un ou plusieurs lés 210 de tissu de la couche externe.

Pour le textile externe le choix s'est porté sur un tissu à fibres céramiques de type fibres d'oxydes métalliques polycristallins utilisé dans les applications spatiales et commercialisé sous la marque NEXTEL 440 BF20 de la société 3M de composition chimique approchée 70% Al₂O₃ ,28% SiO₂, 2% B₂O₃.

Une enduction, schématisée par la flèche 411 sur la figure 10, au moyen d'un film polyuréthane contrecollé sur le tissu est réalisée sur la face externe du textile externe pour le protéger contre l'humidité et lui assurer une souplesse importante. Les caractéristiques techniques du textile externe sont:

| | |
|---|---|
| Masse surfacique textile nu | 505g/m² ±10g/m2 |
| Fibre céramique | Nextel 440 2000 denier (chaine et trame) |
| Façonnage | Satin 5 |
| Ep théorique | 0,51 mm |
| Couleur | Corail |
| Matériau revêtement, d'un seul côté | Film polyuréthane |
| Aspect | Transparent |
| Allongement à rupture | >20% |
| revêtement | |
| Masse surfacique revêtement seul | <20g/m2 |
| Nature adhésif | Adhésif base polyuréthane |
| Masse surfacique adhésif | <35g/m2 |
| Allongement à rupture revêtement | >20% |
| Autre | Surface non pégueuse |
| Tenue à l'arrachement du film sur le textile (traction perpendiculaire) | > 0,2MPa |

Le textile interne choisi est composé de textile aramide poly(p-phénylènetéréphtalamide) (PPD-T) tel que le tissu commercialisé sous la marque KEVLAR 29 de la société Fabric Devlopment Inc qui a de très bonnes caractéristiques mécaniques comme décrit dans le tableau ci-dessous:

| | |
|---|---|
| Masse surfacique textile nu | 280g/m² ±10g/m2 |
| Fibre PPD-T | Kevlar29 1000 denier (chaine et trame) |
| Façonnage | Croisé 0°/90° équilibré 31×31 |
| Ep théorique | 0,38mm |
| Tenue à rupture sens chaine (nominal) | >120N/mm |
| Tenue à rupture sens trame (nominal) | >110N/mm |

Pour rendre le matériau étanche, une enduction de type enduction silicone HTV (vulcanisation haute température) schématisée par la flèche 410 sur la figure 10 est appliquée sur le tissu PPD-T. Un additif de type argent est rajouté afin de limiter la pégosité du matériau.

| | |
|---|---|
| Matériau enduction | Silicone HTV |
| Aspect | Couche homogène de couleur gris argenté, d'un seul côté |
| Allongement à rupture enduction | >12% |
| Masse surfacique du silicone | < 120g/m2 |
| Tenue à l'arrachement du revêtement sur le textile (traction perpendiculaire) | > 0,5MPa |
| Autre | Surface non |
| | pégueuse |

Pour dimensionner les tissus, les charges déterminées par analyse sont:
- les différentiels de pression tout au long du cycle de vie en vol soit un temps inférieur à 3 minutes, l'onde de choc en sollicitation axiale dans une direction d'écrasement d'une valeur de -100 à -200 mbar, typiquement -149 mbar, l'onde de choc en sollicitation non-axiale dans une direction d'écrasement d'une valeur de -600 à -800 mbar, typiquement -710 mbar localement, dépressurisation sollicitation en arrachement: +150 à +250mbar, typiquement +200mbar;
- la pression acoustique;
- le vecteur accélération;
- le flux thermique d'approximativement 1600°C max;
- le balancement de la tuyère de +/- 7°.

Les efforts mécaniques doivent transiter uniquement par les couches PPD-T du textile interne. Ceci oblige à avoir des sur-longueurs en face textile externe céramique pour ne pas transmettre les efforts du PPD-T vers le textile céramique.

La protection annulaire est conformée en sorte de présenter un profil en diabolo qui lui confère la souplesse adaptée à encaisser les mouvements angulaires de la tuyère.

Pour ce faire on réalise un gabarit support (ou plusieurs si un rendement de fabrication plus important est souhaité) comportant la partie inférieure et la partie supérieure d'un secteur hyperboloïde dont la longueur correspond par convenance à un cinquième du périmètre d'un tambour hyperboloïde se positionnant à l'intérieur de la protection.

Un exemple de ce gabarit 300 est représenté en figure 3 en début de dépôt de la couche interne.

Le gabarit comporte deux zones de réalisation de la protection, une zone supérieure 310a et une zone inférieure 310b jointives, ces zones étant limitées par des bordures supérieure 320a et inférieure 320b.

Le gabarit est muni de poignées de transport 330 et correspond à un secteur de fabrication de la protection.

Pour fixer les idées, pour les applications aux lanceurs précités, les secteurs sont d'une longueur d'environ 2 mètres pour un périmètre total de la protection d'environ 10 mètres.

La couche interne 230 de la protection annulaire est réalisée en premier avec plusieurs nappes assemblées, une première nappe étant représentée sur la figure 3.

Pour réaliser la protection, des morceaux de tissus et de non tissés plats sont découpés selon des patrons adaptés à donner une section en diabolo à la protection lors de l'assemblage de ces morceaux par couture.

Les figures 4A à 4C représentent les plis ou lés utilisés pour réaliser la couche interne d'une nappe et la figure 4D représente la couche interne obtenue.

En figure 4A est représenté un pli kevlar 233 de base de la réalisation de la couche interne d'une nappe. Le pli 233 de tissu PPD-T 233 est de forme générale en trapèzes isocèles dont les bords parallèles 233e et 233f sont courbes pour épouser la courbure de la protection terminée et dont les bords inclinés 233a et 233b font un angle avec les bords parallèles, cet angle étant tel que les bords inclinés soient parallèles à l'axe de révolution de la protection une fois celle-ci terminée. Ces plis sont recouverts de plis de renfort PPD-T 232 cousus sur les plis en trapèzes isocèles.

Le pli 233 comporte en outre des pattes 233c de réalisation de goussets en partie supérieure, des créneaux 233d dans sa partie inférieure destinée à être cousue à un pli complémentaire. Le pli de base reçoit un pli de renfort 232 dont les créneaux 232c viennent s'intercaler entre les pattes 233c du pli de base 233.

Le pli de base dépasse latéralement d'un côté et le pli renfort dépasse latéralement de l'autre côté comme représenté en figure 4D pour permettre un assemblage par encastrement des extrémités plis de base et des plis de renfort réalisant une fixation renforcée de ces plis.

Ces plis renforcés dont les diverses épaisseurs sont cousues sont disposés l'un à côté de l'autre avec recouvrement sur une première partie de secteur (par exemple la partie supérieure) et cousus ensemble pour former des nappes préformées courbes comme représenté aux figures 5A et 5B. Selon l'exemple de la figure 5A, trois nappes 230, 230', 230" sont disposées sur la longueur du demi-secteur et jointes par des bords de recouvrement. Dans cette configuration, les lés 234 de la figure 4C sont utilisés pour coudre les trois plis ensemble et renforcer les parties de fixation de la protection avec les collerettes de fixation de la jupe et de la tuyère. Ces lés constituent des bandes renfort en PPD-T cousues sur les bords supérieur et inférieur des nappes assemblées.

La figure 5B représente la couture des nappes 230 et 230′ à recouvrement entre les extrémités 232b', 233b qui emprisonnent les extrémités 232a, 233'a des plis de base et de renfort.

La seconde partie du secteur (par exemple la partie inférieure) est réalisée de la même façon et assemblée à la première comme représenté en figure 6 où les nappes inférieure et supérieure sont assemblées sur le gabarit. Une fois que les nappes jointives à recouvrement de chaque demi-secteur sont cousues ensemble, les parties inférieure et partie supérieure des nappes sont positionnées sur le secteur hyperboloïde et sont assemblées ensemble par couture avec recouvrement au niveau de la jonction de périmètre le plus petit du secteur hyperboloïde pour réaliser le secteur de nappe hyperboloïde. Le recouvrement au niveau de la jonction renforce le secteur de protection réalisé et impose la forme en secteur de diabolo.

Sur les nappes assemblées est déposée une couche de rembourrage en non tissé 220 d'une épaisseur de 10mm à 15mm cousue sur les nappes. Ensuite, des plis 210 de tissu textile fibres céramiques représentés à la figure 2 et à la figure 4E sont déposés et cousus sur l'ensemble pour former une nappe multi-plis de la largeur du secteur. Les éléments constitutifs de la nappe multi-plis sont cousus en forme sur le secteur.

Les figures 7A et 7B représentent la pose des couches de rembourrage au niveau des jonctions des demi-secteurs supérieur et inférieur. La pose du rembourrage se fait en amenant les rembourrages haut et bas 220 jusqu'à les écraser l'une contre l'autre en sorte de réaliser des bourrelets 221 au niveau de la jonction des demi-secteurs.

La figure 7C représente la jonction des demi secteurs haut et bas pour ce qui concerne les plis 210a, 210b de tissu de fibres céramiques de l'extérieur de la protection.

Une sur-longueur en forme de boucle 211 est réalisée au niveau de la jonction.

Cette sur-longueur combinée aux bourrelets 221 a pour but de donner de la souplesse au niveau du tissu de fibres céramiques afin d'encaisser les débattements de la protection sans faire subir de contraintes de traction à la couche externe en fibres céramique fragiles.

Cinq nappes identiques épousant chacune la forme d'un secteur hyperboloïde sont réalisées et ces nappes sont ensuite retirées et assemblées bout à bout sur un mandrin représenté à la figure 11 formant un second gabarit en forme de tambour hyperboloïde reproduisant la forme interne de la protection et comportant une partie supérieure 350 et une partie inférieure 351 séparables selon le plan contenant le diamètre le plus faible de la protection. On termine la protection en cousant les deux extrémités de la bande en forme sur le second gabarit formé par le mandrin. Les figures 8A et 8B représentent la couture des bandes entre elles.

Selon la figure 8A, la couche interne inférieure réalisée avec les plis ou lés en fibres aramide donnant la tenue mécanique de la protection sont cousus à recouvrement et encastrement des plis 232, 233, les plis ou lés 220 de la couche de rembourrage comportant une sur-longueur ont leur extrémité découpée pour réaliser une encastrement 220a et sont cousus en croix par des fils 222 représenté en figure 8B. Les plis de tissu céramique comportent une sur-longueur et sont comme représenté en figure 8C rabattus sur la jonction l'un des plis ayant son extrémité 210r repliée avant couture transversale 215 des couches ensemble.

Le deux partie du mandrin n'ont plus qu'à être séparées pour libérer la protection annulaire terminée dont la face interne est constituée par les plis PPD-T assemblés et la face externe les plis textile céramique assemblés.

On réalise ensuite une enduction des faces interne et externe de la bande pour la rendre étanche à l'humidité .

Pour la fixation de la protection, selon le détail de la figure 9A, les pattes 233c sont pourvues de trous 251a, 251b qui se retrouvent sur les bords supérieur et inférieur des renforts de la protection annulaire.

Ces pattes sont repliées pour réaliser des goussets de réception de câbles métalliques de renfort 250 comme représenté en figure 9B. Les œillets 251 formés lors du repliement des pattes reçoivent des vis de fixation d'une part avec la jupe et d'autre part avec une collerette sur la tuyère.

La figure 9C montre d'autres goussets 253, 254 de réception de câbles 252, 255 disposés sur la couche de tissu aramide à partir de lés complémentaires de tissus.

Les rabats réalisés à partir des lés 234 de la figure 4C recouvrent les fixations et sont eux-mêmes pourvus de passants pour des câbles en sorte de maintenir les rabats sur la jupe et la collerette.

La figure 10 représente en coupe la protection en position entre la collerette 4 de fixation sur la jupe et la collerette 5 de fixation sur la tuyère. La couche de tissu aramide comporte les plis 233 dont les extrémités 233c comportent les trous de fixation pour les boulons 41 côté jupe et 51 côté tuyère. Les lés de renfort 234 prolongent la protection pour recouvrir les zones de fixation une fois des câbles acier passés dans des passants d'extrémités 234a des lés de renfort 234 et tendus.

L'invention n'est pas limitée aux exemples représentés et notamment le ou les gabarits en forme de secteurs peuvent réaliser plus ou moins d'un cinquième de la circonférence de la protection.

## Revendications

1. Procédé de fabrication d'une protection thermique annulaire souple textile se positionnant entre la jupe arrière (1) et la tuyère (2) d'un lanceur spatial (1000) **caractérisé en ce qu'**il comporte:
- la réalisation d'un ou plusieurs premiers gabarits support (300) en forme de secteurs de tambour hyperboloïde de révolution définissant la forme de la surface interne de la protection,
- la réalisation, sur une partie inférieure (310a) et une partie supérieure (310b) de ces secteurs de tambour, de plis (232, 233, 234) constitutifs de demi faces internes de secteurs de la protection,
- la pose et la couture de ces demi faces internes ensemble sur le ou les gabarits support pour former la face interne desdits secteurs de la protection,
- la pose et la couture d'une couche de rembourrage (220) sur l'extérieur de ladite face interne puis
- la pose et la couture d'une face externe (210) de la protection sur le rembourrage de sorte que les secteurs de protection ainsi réalisés épousent le profil desdits secteurs de tambour hyperboloïde,
- la couture des secteurs de la protection bout à bout ensemble pour former une bande de la longueur de la protection et
- la couture des extrémités de la bande ensemble pour terminer la protection annulaire.

2. Procédé selon la revendication 1 pour lequel le ou les premiers gabarits support (300) ont une longueur d'un cinquième de la circonférence du tambour hyperboloïde.

3. Procédé selon la revendication 1 ou 2 pour lequel la face interne de la protection annulaire est réalisée à partir de plis (232, 233, 234) de tissu aramide et pour lequel pour réaliser ladite face interne on découpe des plis (233) de tissu aramide en forme générale en trapèzes isocèles dont les bords parallèles (233e, 233f) sont courbes pour épouser la courbure de la protection terminée et dont les bords inclinés (233a, 233b) font un angle avec les bords parallèles adapté à réaliser des bords parallèles à l'axe de révolution de la protection une fois celle-ci terminée et pour lequel on découpe des plis de renfort aramide (232) ensuite cousus sur les plis en trapèzes isocèles pour réaliser des plis renforcés.

4. Procédé selon la revendication 3 pour lequel les plis renforcés sont disposés les uns à côté des autres avec recouvrement et cousus ensemble sur un demi secteur supérieur ou inférieur du premier gabarit pour réaliser une bande supérieure ou inférieure aramide de la longueur du secteur et pour lequel des lés de renfort (234) aramide sont cousus sur les bords supérieur et inférieur des bandes supérieure et/ou inférieure.

5. Procédé selon la revendication 4 pour lequel les bandes supérieure et inférieure sont disposées sur les parties supérieure et inférieure des secteurs de tambour (300) et assemblées ensemble par couture avec recouvrement (232a, 233b, 233'a, 232'b) au niveau de la jonction de périmètre le plus petit du secteur hyperboloïde pour réaliser un secteur de nappe hyperboloïde.

6. Procédé selon l'une quelconque des revendications précédentes pour lequel on dépose et coud la couche de rembourrage (220) sur la face externe des plis de tissu aramide, puis on dépose et coud la face externe (210) en tissu céramique de la protection en forme sur le secteur en réalisant des sur-longueurs de limitation de tension de ladite face externe.

7. Procédé selon l'une quelconque des revendications précédentes pour lequel cinq nappes identiques, chacune épousant la forme du secteur hyperboloïde sont réalisées et pour lequel ces nappes sont ensuite retirées et assemblées bout à bout avec recouvrement, à plat ou sur un second gabarit en forme de tambour hyperboloïde (350, 351), pour former une bande dont la longueur correspond au périmètre de la protection.

8. Procédé selon la revendication 7 pour lequel le second gabarit comporte une partie supérieure (351) et une partie inférieure (350) séparables selon le plan contenant le diamètre le plus faible de la protection et, pour lequel une fois la couture des deux extrémités de la bande pour boucler la protection annulaire réalisée, on sépare les deux parties du second gabarit pour libérer la protection annulaire dont la face interne est constituée par les plis textiles aramide assemblés et la face externe est constituée par les plis textile céramique assemblés.

9. Procédé selon l'une quelconque des revendications précédentes pour lequel on procède à une enduction des faces interne et externe (410, 411) de la protection thermique annulaire.

10. Procédé selon la revendication 9 pour lequel l'enduction (411) sur la face externe de la protection annulaire est une enduction au moyen d'un film polyuréthane contrecollé sur le tissu pour protéger ladite protection contre l'humidité et lui assurer une souplesse importante.

11. Procédé selon la revendication 9 ou 10 pour lequel l'enduction (410) sur la face interne est une enduction de type enduction silicone HTV.

12. Protection thermique annulaire (100) souple textile multicouches à profil diabolo, destinée à se positionner entre la jupe arrière (1) et la tuyère (2) d'un lanceur spatial, **caractérisée en ce qu'**elle est réalisée selon le procédé de l'une quelconque des revendications 1 à 11, et **en ce qu'**elle comporte une couche interne constituée par des plis de tissu aramide, une couche médiane de rembourrage et une couche externe constituée par des plis de tissu à fibres céramiques, l'ensemble des couches étant constitué des plis ou lés cousus, les couches étant en outre cousues ensemble, la couche externe étant cousue avec des sur-longueurs de limitation d'efforts sur ladite couche externe lors de mouvements de la protection.

13. Protection thermique annulaire selon la revendication 12 dont les bords supérieur et inférieur sont munis de pattes (233c) pourvues d'œillets (251) sous des rabats (234, 234a).

14. Protection thermique annulaire selon la revendication 13 pour laquelle les pattes (233c) se replient en forme de goussets de retenue de câbles métalliques (250) de renfort de la protection.

15. Protection thermique annulaire selon la revendication 13 ou 14 pour laquelle les œillets sont configurés pour recevoir des vis ou rivets de fixation d'une part avec la jupe et d'autre part avec une collerette sur la tuyère.

16. Lanceur, fusée ou véhicule spatial (1000) comportant une jupe arrière (1) et une tuyère (2) reliées par une protection thermique selon l'une quelconque des revendications 12 à 15.

## Patentansprüche

1. Verfahren zur Herstellung einer ringförmigen, nachgiebigen, textilen Wärmeabschirmung, die zwischen der Heckschürze (1) und der Düse (2) einer Trägerrakete (1000) anzuordnen ist, **dadurch gekennzeichnet, dass** es umfasst:
- Herstellen einer oder mehrerer erster Tragschablonen (300) in Form von umlaufenden Hyperboloid-Trommelsektoren, die die Form der inneren Oberfläche der Abschirmung definieren,
- Herstellen von Lagen (232, 233, 234) auf einem unteren Abschnitt (310a) und einem oberen Abschnitt (310b) dieser Trommelsektoren, die aus inneren Sektor-Halbflächen der Abschirmung bestehen,
- Auflegen und Zusammennähen dieser inneren Halbflächen auf der bzw. den Tragschablone(n), um die Innenfläche der Sektoren der Abschirmung zu bilden,
- Auflegen und Aufnähen einer Polsterschicht (220) auf der Außenseite der Innenfläche und anschließend
- Auflegen und Aufnähen einer Außenfläche (210) der Abschirmung auf die Polsterung, so dass die so ausgebildeten Abschirmungssektoren sich an das Profil der Hyperboloid-Trommelsektoren anschmiegen,
- Zusammennähen der Sektoren der Abschirmung auf Stoß, so dass ein Band von der Länge der Abschirmung entsteht, und
- Zusammennähen der Enden des Bandes, um die ringförmige Abschirmung abzuschließen.

2. Verfahren nach Anspruch 1, wobei die erste bzw. die ersten Tragschablone(n) (300) eine Länge von einem Fünftel des Umfangs der Hyperboloid-Trommel haben.

3. Verfahren nach Anspruch 1 oder 2, wobei die Innenfläche der ringförmigen Abschirmung aus Lagen (232, 233, 234) aus Aramidgewebe hergestellt wird und wobei zur Herstellung der Innenfläche Lagen (233) aus Aramidgewebe in Form von gleichschenkligen Trapezen zugeschnitten werden, deren parallele Kanten (233e, 233f) gekrümmt verlaufen, um sich an die Krümmung der abgeschlossenen Abschirmung anzuschmiegen, und deren schräge Kanten (233a, 233b) mit den parallelen Kanten einen Winkel einschließen, der dazu ausgelegt ist, dass nach Fertigstellung der Abschirmung Kanten entstehen, die parallel zur Umlaufachse der Abschirmung verlaufen, und wobei Aramid-Verstärkungslagen (232) zugeschnitten und dann auf die gleichschenkligen Trapezlagen aufgenäht werden, um verstärkte Lagen zu bilden.

4. Verfahren nach Anspruch 3, wobei die verstärkten Lagen überlappend nebeneinander angeordnet und auf einem oberen oder unteren Halbsektor der ersten Schablone zusammengenäht werden, um ein oberes oder unteres Aramidband über die Länge des Sektors zu bilden, und wobei Aramid-Verstärkungsstreifen (234) auf die obere und die untere Kante des oberen und/oder unteren Bandes aufgenäht werden.

5. Verfahren nach Anspruch 4, wobei das obere und das untere Band auf den oberen und den unteren Abschnitt der Trommel-Sektoren (300) angeordnet und durch überlappende Nähte (232a, 233b, 233'a, 232'b) an der Verbindungsstelle mit kleinstem Umfang des Hyperboloid-Sektors miteinander verbunden werden, um einen Hyperboloid-Bahnsektor zu bilden.

6. Verfahren nach einem der vorhergehenden Ansprüche, wobei die Polsterschicht (220) auf die Außenfläche der Aramidgewebelagen aufgelegt und angenäht wird und dann die Außenfläche (210) aus Keramikgewebe der in Form gebrachten Abschirmung auf den Sektor aufgelegt und angenäht wird, indem spannungsbegrenzende Überlängen der Außenfläche gebildet werden.

7. Verfahren nach einem der vorhergehenden Ansprüche, wobei fünf identische Bahnen hergestellt werden, von denen sich jede an die Form des Hyperboloid-Sektors anschmiegt, und wobei diese Bahnen dann entfernt und mit Überlappung, flach oder auf einer zweiten Schablone in Hyperboloid-Trommelform (350, 351) auf Stoß zusammengefügt werden, um ein Band zu bilden, dessen Länge dem Umfang der Abschirmung entspricht.

8. Verfahren nach Anspruch 7, wobei die zweite Schablone einen oberen Abschnitt (351) und einen unteren Abschnitt (350) enthält, die entlang der Ebene, die den kleinsten Durchmesser der Abschirmung enthält, getrennt werden können, und wobei nach dem Zusammennähen der beiden Enden des Bands zum Abschließen der hergestellten ringförmigen Abschirmung die beiden Abschnitte der zweiten Schablone getrennt werden, um die ringförmige Abschirmung freizugeben, deren Innenfläche aus den zusammengefügten Aramid-Textillagen und deren Außenfläche aus den zusammengefügten Keramik-Textillagen gebildet sind.

9. Verfahren nach einem der vorhergehenden Ansprüche, wobei eine Beschichtung der Innen- und der Außenfläche (410, 411) der ringförmigen Wärmeabschirmung erfolgt.

10. Verfahren nach Anspruch 9, wobei die Beschichtung (411) auf der Außenfläche der ringförmigen Abschirmung eine Beschichtung mittels eines Polyurethanfilms ist, der auf das Gewebe auflaminiert ist, um die Abschirmung vor Feuchtigkeit zu schützen und ihr eine weitgehende Nachgiebigkeit zu verleihen.

11. Verfahren nach Anspruch 9 oder 10, wobei die Beschichtung (410) auf der Innenfläche eine HTV-Silikonbeschichtung ist.

12. Ringförmige, nachgiebige, mehrschichtige Wärmeabschirmung (100) aus Textil mit Doppelkegel-Profil, die dazu bestimmt ist, zwischen der Heckschürze (1) und der Düse (2) einer Trägerrakete angeordnet zu werden, **dadurch gekennzeichnet, dass** sie mit dem Verfahren nach einem der Ansprüche 1 bis 11 hergestellt ist und dass sie eine innere Schicht, die aus Lagen von Aramidgewebe besteht, eine mittlere Polsterschicht und eine äußere Schicht, die aus Lagen von Keramikfasergewebe besteht, aufweist, wobei alle Schichten aus vernähten Lagen oder Bahnen bestehen, wobei die Schichten ferner miteinander vernäht sind, wobei die äußere Schicht mit Überlängen vernäht ist, um bei Bewegungen der Abschirmung die auf die äußere Schicht wirkenden Kräfte zu begrenzen.

13. Ringförmige Wärmeabschirmung nach Anspruch 12, deren obere und untere Kante mit Laschen (233c) versehen sind, die Ösen (251) unterhalb von Umschlagklappen (234, 234a) aufweisen.

14. Ringförmige Wärmeabschirmung nach Anspruch 13, wobei die Laschen (233c) in Form von Zwickeln zum Halten von Metallseilen (250) zur Verstärkung der Abschirmung umgeschlagen werden.

15. Ringförmige Wärmeabschirmung nach Anspruch 13 oder 14, wobei die Ösen zur Aufnahme von Schrauben oder Nieten für die Befestigung einerseits mit der Schürze und andererseits mit einem Flansch an der Düse ausgebildet sind.

16. Trägerrakete, Rakete oder Raumfahrzeug (1000) mit einer Heckschürze (1) und einer Düse (2), die durch eine Wärmeabschirmung nach einem der Ansprüche 12 bis 15 verbunden sind.

## Claims

1. Method for manufacturing a flexible textile annular thermal protection positioned between the rear skirt (1) and the nozzle (2) of a space launcher (1000), **characterised in that** it includes:
- forming one or more first support templates (300) in the form of hyperboloid drum sectors of revolution defining the shape of the inner protection surface,
- forming, on a lower part (310a) and an upper part (310b) of these drum sectors, folds (232, 233, 234) constituting inner half faces of protection sectors,
- laying and sewing these inner half faces together on the support template(s) to form the inner face of said protection sectors,
- laying and sewing a layer of padding (220) on the outside of said inner face, then
- laying and sewing an outer protection face (210) onto the padding such that the protection sectors formed in this way correspond with the profile of said hyperboloid drum sectors,
- sewing the protection sectors together end-to-end to form a strip along the length of the protection and
- sewing the ends of the strip together to complete the annular protection.

2. Method according to claim 1, wherein the first support template(s) (300) has a length that is one fifth of the circumference of the hyperboloid drum.

3. Method according to claim 1 or 2, wherein the inner face of the annular protection is formed by folds (232, 233, 234) of aramid fabric and wherein to make said inner face, folds (233) of aramid fabric are cut out in the general shape of isosceles trapezoids, whose parallel edges (233e, 233f) are curved to match the curvature of the finished protection and the inclined edges (233a, 233b) of which form an angle with the parallel edges adapted to form edges parallel to the axis of revolution of the protection, once the latter is finished, and wherein folds of aramid reinforcement (232) are cut out and then sewn onto the folds of isosceles trapezoids to produce reinforced folds.

4. Method according to claim 3, wherein the reinforced folds are arranged next to one another with an overlap and sewn together on an upper or lower half sector of the first template to form an upper or lower aramid strip of the length of the sector, and wherein the aramid reinforcement strips (234) are sewn onto the upper and lower edges of the upper and/or lower strips.

5. Method according to claim 4, wherein the upper and lower strips are arranged on the upper and lower parts of the drum sectors (300) and assembled together by sewing with an overlap (232a, 233b, 233'a, 232'b) at the smallest perimeter join of the hyperboloid sector to provide a hyperboloid layer sector.

6. Method according to any of the preceding claims, wherein the padding layer (220) is arranged and sewn onto the outer face of the folds of aramid fabric, then the outer face (210) of ceramic fabric of the protection is arranged and sewn in form on the sector by making tension-limiting over-lengths of said outer face.

7. Method according to any of the preceding claims, wherein five identical layers, each matching the shape of the hyperboloid sector are made and wherein said layers are then removed and assembled end-to-end with an overlap, flat or on a second hyperboloid drum-shaped template (350, 351) to form a strip whose length corresponds to the perimeter of the protection.

8. Method according to claim 7, wherein the second template includes an upper part (351) and a lower part (350) which can be separated according to the plane containing the smallest diameter of the protection and, wherein once the two ends of the strip have been sewn together to close the annular protection formed, the two parts of the second template are separated to release the annular protection, the inner face of which is formed by assembled aramid textile folds and the outer face of which is formed by the assembled ceramic textile folds.

9. Method according to any of the preceding claims, wherein a coating is carried out of the inner and outer faces (410, 411) of the annular thermal protection.

10. Method according to claim 9, wherein the coating (411) on the outer face of the annular protection is a coating of polyurethane film laminated to the fabric to protect said protection against humidity and provide considerable flexibility.

11. Method according to claim 9 or 10, wherein the coating (410) on the inner face is an HTV silicone type coating.

12. Flexible multilayer textile annular thermal protection (100) with a diabolo profile, intended to be positioned between the rear skirt (1) and the nozzle (2) of a space launcher, **characterised in that** it is formed according to the method of any of claims 1 to 11 and **in that** it includes an inner layer formed by folds of aramid fabric, a middle padding layer and outer layer formed by folds of ceramic fibre fabric, all of the layers being formed by folds or sewn strips, the layers also being sewn together, the outer layer being sewn with over-lengths for limiting forces on the said outer layer during movements of the protection.

13. Annular thermal protection according to claim 12, the upper and lower edges of which are provided with tabs (233c) provided with eyelets (251) below the flaps (234, 234a).

14. Annular thermal protection according to claim 13, wherein the tabs (233c) fold back in the form of gussets for holding metal cables (250) for reinforcing the protection.

15. Annular thermal protection according to claim 13 or 14, wherein the eyelets are configured to receive screws or rivets for fixing on the one hand to the skirt and on the other hand to a flange on the nozzle.

16. Launcher, rocket or space vehicle (1000) including a rear skirt (1) and a nozzle (2) connected by a thermal connection according to any of claims 12 to 15.
